# EUROPÄISCHE PATENTSCHRIFT

(11) **EP 2 595 884 B1**
(45) Veröffentlichungstag und Bekanntmachung des Hinweises auf die Patenterteilung: **25.05.2016**
(21) Anmeldenummer: 11821142.4
(22) Anmeldetag: 15.07.2011
(51) Int. Cl.: F16B 21/02, B64D 7/08, B64D 1/08, B64D 1/02

(54) **LÖSBARE VERBINDUNGSANORDNUNG ZUR ANBRINGUNG VON ABWERFBAREN AUSSENLASTEN AN EINEM LUFTFAHRZEUG**
DETACHABLE CONNECTING ARRANGEMENT FOR FITTING LAUNCHABLE EXTERNAL LOADS TO AN AIRCRAFT
DISPOSITIF DE LIAISON DÉTACHABLE PERMETTANT DE FIXER SUR UN AÉRONEF DES CHARGES EXTERNES POUVANT ÊTRE LARGUÉES

(30) Priorität: 21.07.2010 DE 102010031750
(43) Veröffentlichungstag der Anmeldung: 29.05.2013
(73) Patentinhaber: Airbus Defence and Space GmbH, 85521 Ottobrunn (DE)
(72) Erfinder: CERNKO, Emil, 85293 Reichertshausen (DE); DESLANDES, Ronald, 82008 Unterhaching (DE); SCHWARZ, Wolfgang, 81545 München (DE)
(74) Vertreter: Isarpatent
(86) Internationale Anmeldenummer: PCT/DE2011/001444
(87) Internationale Veröffentlichungsnummer: WO 2012/028130

(56) Entgegenhaltungen:
- DE-C1- 3 703 792
- US-A- 3 942 749
- US-A- 3 954 233
- US-A- 5 172 873
- US-A- 5 932 829

## Beschreibung

### TECHNISCHES GEBIET

Die vorliegende Erfindung betrifft eine lösbare Verbindungsanordnung zur Anbringung von abwerfbaren Außenlasten an einem Luftfahrzeug gemäß dem Oberbegriff des Patentanspruchs 1.

### HINTERGRUND DER ERFINDUNG

Luftfahrzeuge, insbesondere Kampfflugzeuge, sind häufig mit abwerfbaren Außenlasten, beispielsweise Waffen oder zusätzlichen Kraftstoffbehältern, versehen. Diese Außenlasten sind regelmäßig an zwei Punkten am Luftfahrzeug, beispielsweise unter dem Rumpf oder unter der Tragfläche, angebracht. Die Anbringung erfolgt mittels Haken und Ösen, wobei die Haken und/oder die Ösen zum Abwerfen der Außenlast geöffnet werden können. Zusätzlich sind Abstoßeinrichtungen vorgesehen, die dafür sorgen, dass die Außenlast beim Abwerfen vom Luftfahrzeug weggestoßen wird.

Beim Abwerfen von Außenlasten von einem Luftfahrzeug muss sichergestellt werden, dass kein Teil des Luftfahrzeugs von der abgeworfenen Außenlast getroffen und beschädigt wird. Dazu sind die Abstoßeinrichtungen üblicherweise so eingestellt, dass die Außenlast vom Flugzeug weggestoßen und gleichzeitig in Rotation versetzt wird, damit sich die Nase der Außenlast nach unten bewegt ("Pitch-Down"). Diese Pitch-Down-Nickbewegung der Nase nach unten bewirkt, dass die anströmende Luft auf der Oberseite der Außenlast angreift und diese weiter nach unten, also vom Luftfahrzeug weg, drückt, wodurch die Gefahr der Kollision der Außenlast mit dem Luftfahrzeug in der Regel ausgeschlossen wird.

Es gibt jedoch Situationen, insbesondere bei großen und leichten Außenlasten, wie zum Beispiel leeren Tanks, bei denen diese bekannte Maßnahme nicht zwangsläufig zum gewünschten Erfolg führt. Große und leichte Außenlasten unterliegen aufgrund ihres verhältnismäßig geringen Gewichts nicht zu vernachlässigenden Auftriebskräften, die bewirken können, dass das Heck der Außenlast trotz der eingeleiteten Nickbewegung der Nase nach unten und der auf der Oberseite der Außenlast angreifenden Luftströmung durch die Auftriebskräfte nach oben in Richtung auf das Luftfahrzeug bewegt wird. Dies kann insbesondere dann kritische Situationen hervorrufen, wenn die Außenlast unter dem Rumpf des Luftfahrzeugs aufgehängt ist. Aber auch bei unter den Tragflächen aufgehängten Außenlasten kann bei Luftfahrzeugen, die mit einem tiefliegenden Höhenruder versehen sind, die Gefahr bestehen, dass die Außenlast mit ihrem nach oben auftreibenden Heck gegen das Höhenruder schlägt.

Das Abwerfen von Außenlasten, insbesondere von leeren Tanks, erfordert daher heutzutage stets das Durchführen von bestimmten Flugmanövern, durch die das Risiko der Kollision der abgeworfenen Last mit Teilen des Luftfahrzeugs reduziert wird.

Die US 3,954,233 A, welche als nächstliegender Stand der Technik angesehen wird und alle Merkmale des Oberbegriffes des Anspruchs 1 offenbart, zeigt und beschreibt eine Aufhängevorrichtung für Flugzeugaußenlasten. Bei dieser Aufhängevorrichtung greift ein an der Außenlast vorgesehenes hakenartiges Element in einen schwenkbaren Gegenhaken der luftfahrzeugseitigen Aufhängevorrichtung ein. Dabei liegt eine untere Fläche an einem Vorsprung des lastseitigen hakenartigen Elements auf einer oberen Fläche einer Aufnahmeausnehmung des schwenkbaren Gegenhakens auf, wobei die Gewichtskraft der Last nach unten abgestützt wird.

Oberhalb der oberen Fläche des lastseitigen hakenartigen Elements ist im Bereich der Ausnehmung des luftfahrzeugseitigen Gegenhakens eine Rolle vorgesehen, die den Vorsprung des lastseitigen hakenartigen Elements beim Einführen in die Ausnehmung des Gegenhakens führt. Ist das lastseitige hakenartige Element mit dem Gegenhaken im vorbeschriebenen Eingriff zur Abstützung der Gewichtskraft der Last, so steht die Rolle nicht mehr in Berührung mit der oberen Fläche des hakenartigen Elements. Die Abstützung von der Last ausgehender nach oben gerichteter Kräfte erfolgt durch ein Keilelement, welches unmittelbar oder mittelbar zwischen einem luftfahrzeugseitigen Stützkeil und der oberen Fläche des hakenartigen Elements einen Formschluss herstellt. Soll die Last vom Luftfahrzeug abgesetzt werden, so wird zunächst der Keil aus dem Spalt zwischen dem luftfahrzeugseitigen Keilelement und der oberen Fläche des hakenartigen Elements herausgezogen. Dadurch wird nur noch die Gewichtskraft der Last abgestützt.

Die DE 37 03 792 C1 betrifft eine Außenlastaufhängung zum lösbaren Befestigen von Lasten an Flugzeugen. Bei dieser bekannten Vorrichtung greift eine Nase eines an der Außenlast anbringbaren hakenartigen Verbindungselements hinter eine Nase eines am Luftfahrzeug vorgesehenen hakenartigen Bombenschlosses und ein verschiebbarer Bombenschlosskeil drückt auf das hakenartige Element der Außenlast. Zum Lösen dieser Verbindung wird der Bombenschlosskeil verschoben, so dass er außer Eingriff mit der oberen Fläche des hakenartigen Verbindungselements der Außenlast gerät. Die Außenlast kann sich dann vom Haken des Bombenschlosses lösen, wird dabei aber nicht nach oben, also in Richtung auf das Flugzeug hin, abgestützt, so dass auch hier auf die Außenlast einwirkende aerodynamische Kräfte ein unerwünschtes Aufsteigen der Außenlast im Bereich der Aufhängung, also gegen das Flugzeug hin, bewirken können.

### DARSTELLUNG DER ERFINDUNG

Aufgabe der vorliegenden Erfindung ist es, eine lösbare Verbindungsanordnung zur Anbringung von abwerfbaren Außenlasten an einem Luftfahrzeug anzugeben, die durch ihre Konstruktion und Funktionsweise die Sicherheit beim Abwerfen der Außenlast erhöht.

Diese Aufgabe wird durch die im Patentanspruch 1 angegebene lösbare Verbindungsanordnung gelöst.

Die erfindungsgemäße Verbindungsanordnung umfasst zumindest ein an der Außenlast anbringbares hakenartiges Verbindungselement und zumindest ein am Luftfahrzeug anbringbares Aufnahmeelement für das hakenartige Verbindungselement. Dabei ist das hakenartige Verbindungselement mit zumindest einer unteren Stützfläche und zumindest einer oberen Stützfläche versehen und das Aufnahmeelement ist mit zumindest einer ersten Gegenstützfläche, die zum Zusammenwirken mit der zumindest einen unteren Stützfläche ausgebildet ist, und mit zumindest einer zweiten, oberen Gegenstützfläche versehen, die zum Zusammenwirken mit der zumindest einen oberen Stützfläche ausgebildet ist. Die untere Stützfläche und die erste Gegenstützfläche sind ausgestaltet, um vom Luftfahrzeug weg weisende Massenkräfte der Außenlast abzustützen. Das hakenartige Verbindungselement weist einen Befestigungsschaft auf, der mit der Außenlast verbindbar oder verbunden ist und an dessen oberem Ende eine vorspringende Nase vorgesehen ist, an deren Unterseite die untere Stützfläche ausgebildet ist. Das Aufnahmeelement weist eine Ausnehmung auf, die zum Eingriff der Nase ausgebildet ist. Die Erfindung zeichnet sich dadurch aus, dass die erste Gegenstützfläche im Bereich der Wandung der Ausnehmung vorgesehen ist und dass die obere Stützfläche und die obere Gegenstützfläche ausgestaltet sind, um zum Luftfahrzeug hin gerichtete Massenkräfte der Außenlast abzustützen.

### VORTEILE

Diese lösbare Verbindungsanordnung wird im Heckbereich der Außenlast angebracht. Die vordere Aufhängung der Außenlast am Luftfahrzeug kann auf herkömmliche Weise unter Verwendung bekannter lösbarer Verbindungseinrichtungen erfolgen. Zum Lösen der heckseitig angebrachten erfindungsgemäßen lösbaren Verbindungsanordnung werden die untere Stützfläche und die erste Gegenstützfläche durch die auf die Außenlast einwirkenden aerodynamischen Kräfte außer Eingriff gebracht, so dass anschließend das hakenartige Verbindungselement aus dem Aufnahmeelement nach unten austreten kann, wobei die Verbindungselemente außer Eingriff geraten. Während die untere Stützfläche und die zugeordnete Gegenstützfläche außer Eingriff gebracht werden, bleibt die obere Stützfläche des hakenartigen Verbindungselements in Berührung mit der oberen Gegenstützfläche des Aufnahmeelements, so dass eine Bewegung der Außenlast nach oben, also zum Luftfahrzeug hin, verhindert wird und gleichzeitig dabei sichergestellt wird, dass unmittelbar nach Öffnung der die Außenlast am Luftfahrzeug halternden Tragemechanik ein Herausrutschen des Verbindungselements aus dem Aufnahmeelement nicht ermöglicht wird.

Auf diese Weise kann durch die erfindungsgemäß ausgebildete einfache mechanische Konstruktion der Verbindungsanordnung eine auftriebsbedingte Kollision der Außenlast mit dem Luftfahrzeug verhindert werden.

Erfindungsgemäß weist das hakenartige Verbindungselement einen Befestigungsschaft auf, der mit der Außenlast verbindbar ist und an dessen oberem Ende eine vorspringende Nase vorgesehen ist, wobei die untere Stützfläche an der Unterseite der Nase ausgebildet ist. Weiterhin weist das Aufnahmeelement eine Ausnehmung auf, die zum Eingriff der Nase ausgebildet ist, wobei die erste Gegenstützfläche im Bereich der Wandung der Ausnehmung vorgesehen ist.

Bei dieser Konstruktion kann die vorspringende Nase, die im Tragflug in die Ausnehmung des Aufnahmeelements eingreift, auf mechanisch zuverlässige Weise die von der Masse der Außenlast ausgehenden Kräfte auf dem mit dem Luftfahrzeug verbundenen Aufnahmeelement abstützen. Zum Lösen der Verbindungsanordnung muss bei dieser Ausführungsform lediglich die Nase aus der Ausnehmung heraus bewegt werden. Ist das hakenartige Verbindungselement derart an der Außenlast angebracht, dass die Nase in Flugrichtung nach vorne weist und ist das Aufnahmeelement so am Luftfahrzeug angebracht, dass die Öffnung der Ausnehmung nach hinten weist, so kann bei Erreichen des Trennungswinkels die Trennung von Verbindungselement und Aufnahmeelement nahezu ausschließlich durch auf die Außenlast einwirkende Strömungskräfte der anströmenden Luft erfolgen. Vor dem Erreichen des Trennungswinkels, verhindern die durch die Rotation bedingten ausschließlich nach vorne in Flugrichtung weisenden Kräfte ein Herausrutschen des mit der Nase versehenen Kopfes des hakenartigen Verbindungselements nach hinten, wobei diese Kräfte durch die vorspringende Nase gegen das Gehäuse des Aufnahmeelements abgestützt werden.

Besonders vorteilhaft ist es, wenn das Aufnahmeelement eine zweite nutartige Ausnehmung zur Aufnahme des Befestigungsschafts des Verbindungselements aufweist. Dadurch kann der Befestigungsschaft im verriegelten Zustand in der nutartigen Ausnehmung aufgenommen sein und beim Lösen der Verbindungsanordnung kann die vom Befestigungsschaft nach vorne vorspringende Nase unmittelbar nach dem Verlassen der ersten Ausnehmung durch die zweite nutartige Ausnehmung nach unten gleiten.

Vorzugsweise ist die obere Stützfläche an einem oberen Abschnitt des hakenartigen Verbindungselements vorgesehen und die obere Gegenstützfläche ist zumindest an einer Kante am oberen Rand der Ausnehmung des Aufnahmeelements ausgebildet. Hierdurch wird für die Abstützung der von der Außenlast gegen das Luftfahrzeug gerichteten Kräfte eine Linienberührung zwischen dem hakenartigen Verbindungselement und dem Aufnahmeelement genutzt, durch die niedrigere Reibungskräfte zwischen diesen beiden Elementen entstehen, als bei einer Flächenberührung, so dass das Lösen der Verbindung nicht unnötig erschwert wird.

Von Vorteil ist auch, wenn die untere Stützfläche und die erste Gegenstützfläche kreisbogenförmig gekrümmt sind. Durch diese kreisbogenförmige Ausgestaltung kann die Trennung zwischen Verbindungselement und Aufnahmeelement durch eine Schwenkbewegung der Außenlast erfolgen, die durch das Öffnen einer vorderen Verriegelungseinrichtung und das Abstoßen der Nase der Außenlast nach unten hervorgerufen wird.

Besonders von Vorteil ist es dabei, wenn der Mittelpunkt des Krümmungsradius' der ersten Gegenstützfläche auf der oberen Kante liegt. Bei dieser besonders bevorzugten Variante schwenkt das hakenartige Verbindungselement um die obere Kante am oberen Rand der Ausnehmung des Aufnahmeelements, wobei die Berührungslinie zwischen dem oberen Abschnitt des hakenartigen Verbindungselements und der oberen Kante die Schwenkachse definiert. Dadurch, dass die untere Stützfläche und die erste Gegenstützfläche denselben Krümmungsradius besitzen, gleiten diese Flächen bei der Schwenkbewegung aufeinander.

Durch die spezielle geometrische Gestaltung des hakenartigen Verbindungselements und des Aufnahmeelements in dieser besonders bevorzugten Ausführungsform der erfindungsgemäßen Verbindungsanordnung wird erreicht, dass das hakenartige Verbindungselement festgehalten wird, solange ein vorgegebener Nickwinkel der Außenlast nicht überschritten wird. Erst beim Überschreiten dieses Nickwinkels tritt dann automatisch die Nase des hakenartigen Verbindungselements aus der ersten Ausnehmung des Aufnahmeelements aus, so dass sich dann das Verbindungselement vom Aufnahmeelement löst. Dabei wird jedoch stets noch eine Berührung zwischen der oberen Stützfläche des hakenartigen Verbindungselements und der Kante am oberen Rand der Ausnehmung des Aufnahmeelements beibehalten, so dass sich das hakenartige Verbindungselement nur nach unten und nach hinten bezüglich des Aufnahmeelements bewegen kann. Es wird also durch diese Ausgestaltung erreicht, dass das Heck der Außenlast nur nach hinten und unten ausweichen kann, wodurch gewährleistet ist, dass keine Kollision des Hecks mit dem Luftfahrzeug nach dem Lösen der Verbindungsanordnung erfolgt.

Eine besonders bevorzugte Weiterbildung der erfindungsgemäßen Verbindungsanordnung zeichnet sich dadurch aus, dass der Befestigungsschaft des hakenartigen Verbindungselements mit seitlichen Vorsprüngen versehen ist, die an ihrer Unterseite jeweils eine weitere untere Stützfläche aufweisen, dass das Aufnahmeelement im Bereich der Ausnehmung zur Aufnahme des jeweiligen linken beziehungsweise rechten seitlichen Vorsprungs ausgebildet ist und dass jeweils eine untere Gegenstützfläche im Bereich der unteren Wandung der Ausnehmung vorgesehen ist.

Das Vorsehen dieser zusätzlichen seitlichen Vorsprünge mit ihren Stützflächen und der zusätzlichen seitlichen Gegenstützflächen für die Stützflächen der seitlichen Vorsprünge erhöht auf zuverlässige Weise die Tragfähigkeit der gesamten Verbindungsanordnung, da hierbei die Lastkräfte nicht nur über die untere Stützfläche der Nase des hakenartigen Verbindungselements abgestützt werden müssen, sondern sich zusätzlich auf die beiden seitlichen Vorsprünge und deren untere Stützflächen sowie die diesen zugeordneten Gegenstützflächen verteilen.

Auch hierbei ist es von Vorteil, wenn die jeweilige weitere untere Stützfläche und die jeweils zugeordnete untere Gegenstützfläche kreisbogenförmig gekrümmt sind und wenn vorzugsweise der Mittelpunkt des Krümmungsradius' der jeweiligen unteren Gegenstützfläche auf der oberen Kante liegt. In diesem Fall gleiten bei einer Schwenkbewegung des hakenförmigen Verbindungselements um die im Bereich der oberen Kante gebildete Schwenkachse alle unteren Stützflächen und unteren Gegenstützflächen synchron aufeinander.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine perspektivische Ansicht eines hakenartigen Verbindungselements einer erfindungsgemäßen Verbindungsanordnung;
- Fig. 2: eine perspektivische Ansicht eines Aufnahmeelements der erfindungsgemäßen Verbindungsanordnung;
- Fig. 3: einen Vertikalschnitt durch die erfindungsgemäße Verbindungsanordnung im Tragflugzustand;
- Fig. 4: einen Vertikalschnitt durch die erfindungsgemäße Verbindungsanordnung gemäß Fig. 3, jedoch bei verschwenktem hakenartigen Verbindungselement im Augenblick der Auslösung; und
- Fig. 5: die in Fig. 3 und 4 gezeigte Vertikalschnittdarstellung der erfindungsgemäßen Verbindungsanordnung kurz nach dem Auslösen.

### DARSTELLUNG VON BEVORZUGTEN AUSFÜHRUNGSBEISPIELEN

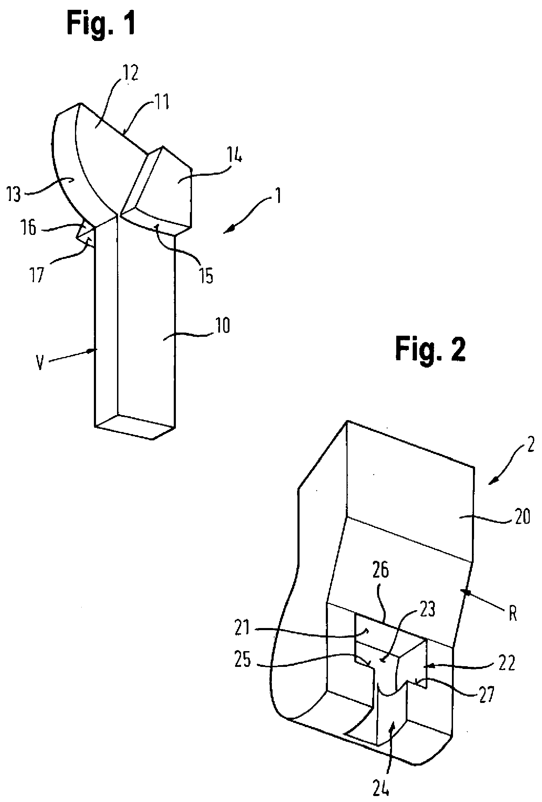

Fig. 1 zeigt ein hakenartiges Verbindungselement 1 einer erfindungsgemäßen lösbaren Verbindungsanordnung. Das entsprechende Aufnahmeelement 2 für das hakenartige Verbindungselement 1 ist in Fig. 2 in perspektivischer Ansicht dargestellt.

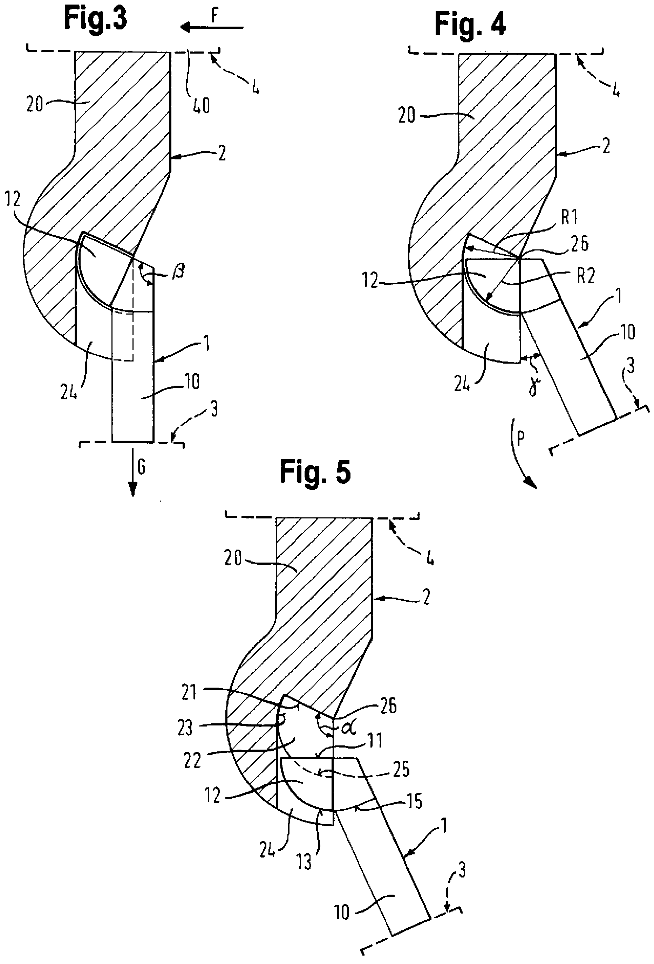

Das hakenartige Verbindungselement 1 weist einen Befestigungsschaft 10 auf, der im Bereich seines unteren Endes mit einer an einem Luftfahrzeug anzubringenden, abwerfbaren Außenlast 3 (Fig. 3) verbindbar oder verbunden ist. Am oberen Ende des Befestigungsschafts 10 ist eine zur einer Vorderseite vorspringende Nase 12 vorgesehen, die an ihrer Oberseite eine im Wesentlichen ebene obere Stützfläche 11 aufweist und die an ihrer Unterseite kreisbogenförmig gekrümmt ist, wobei die kreisbogenförmig gekrümmte Fläche eine erste untere Stützfläche 13 des hakenartigen Verbindungselements 1 bestimmt.

Weiterhin sind am oberen Ende des Befestigungsschafts 10 ein erster seitlicher Vorsprung 14 und ein zweiter seitlicher Vorsprung 16 vorgesehen, die sich auf zwei voneinander abgewandten Seiten des Befestigungsschafts 10, links und rechts von dem Abschnitt des Befestigungsschafts 10 befinden, von dem die Nase 12 vorspringt. Die seitlichen Vorsprünge 14, 16 erstrecken sich somit jeweils in einem rechten Winkel zur Vorsprungsrichtung der Nase 12. An ihrer Unterseite sind die seitlichen Vorsprünge 14, 16 jeweils mit einer weiteren unteren Stützfläche, nämlich einer zweiten unteren Stützfläche 15 und einer dritten unteren Stützfläche 17, versehen. Die zweite untere Stützfläche 15 und die dritte untere Stützfläche 17 sind in derselben Weise wie die erste untere Stützfläche 13 um dieselbe Krümmungsachse wie die untere Stützfläche 13 kreisbogenförmig gekrümmt.

Die Fig. 2 zeigt das Gegenstück zum in Fig. 1 gezeigten hakenartigen Verbindungselement 1, nämlich das Aufnahmeelement 2 für das hakenartige Verbindungselement 1. Auch das Aufnahmeelement 2 ist mit einem Befestigungsschaft 20 versehen, der an seinen oberen Ende am Luftfahrzeug 4, beispielsweise an einem unter dem Rumpf oder unter einer Tragfläche des Luftfahrzeugs 4 angebrachten Pylon 40 anbringbar ist.

Im Bereich des unteren Endes des Aufnahmeelement 2 ist dieses an der Rückseite R mit einer Ausnehmung 22 versehen, die sich zur Rückseite R hin öffnet und die nach unten, also zum unteren Ende hin, in eine nutartige Ausnehmung 24 übergeht, die sich zum unteren Ende hin öffnet.

Die erste Ausnehmung 22 dient zur Aufnahme der Nase 12 des hakenartigen Verbindungselements 1 und zur zumindest teilweisen Aufnahme der seitlichen Vorsprünge 14, 16 des hakenartigen Verbindungselements 1. Die zweite, nutartige Ausnehmung 24 dient zur zumindest teilweisen Aufnahme eines Abschnitts des Befestigungsschafts 10 des hakenartigen Verbindungselements 1, wie in Fig. 3 im Längsschnitt zu erkennen ist.

Die erste Ausnehmung 22 ist dazu an ihrem zur Vorderseite V weisenden Boden der Ausnehmung mit einer ersten Gegenstützfläche 23 versehen, gegen die sich die untere Stützfläche 13 der Nase 12 anlegen und abstützen kann.

Weiterhin ist die Ausnehmung 22 beiderseits der Mündung der zweiten Ausnehmung 24 mit weiteren unteren Gegenstützflächen, nämlich einer zweiten Gegenstützfläche 25 und einer dritten Gegenstützfläche 27 versehen, die zur Anlage und zum Abstützen der Stützflächen 15 beziehungsweise 17 an der Unterseite der seitlichen Vorsprünge 14, 16 des hakenartigen Verbindungselements 1 ausgebildet sind. Die Gegenstützflächen 23, 25 und 27 sind in derselben Weise gekrümmt ausgebildet, wie die zugeordneten Stützflächen 13,15 und 17 des hakenartigen Verbindungselements 1.

An der von der Mündung der zweiten, nutartigen Ausnehmung 24 abgewandten Innenseite der ersten Ausnehmung 22 ist eine obere Gegenstützfläche 21 ausgebildet, die zur Anlage der oberen Stützfläche 11 des hakenartigen Verbindungselements 1 vorgesehen ist. Diese obere Gegenstützfläche 21 verläuft von der zugeordneten oberen Mündungskante 26 der ersten Ausnehmung 22 an der Rückseite R des Aufnahmeelements 2 in Form einer Hinterschneidung nach oben, wie in Fig. 3 zu sehen ist, so dass sich die obere Gegenstützfläche 21 ausgehend von der hinteren Kante 26 in einer Richtung erstreckt, die mit der Längsrichtung der zweiten, nutartigen Ausnehmung einen Winkel α von größer als 90° bildet, wie in den Fig. 3 bis 5 zu erkennen ist.

In angepasster Weise bildet auch die obere Stützfläche 11 des hakenartigen Verbindungselements 1 mit der Längsrichtung des Befestigungsschafts 10 einen Winkel β, der dem Winkel α entspricht.

In den Fig. 3 bis 4 ist weiterhin zu erkennen, dass der Krümmungsradius R1 der Stützflächen 13, 15 und 17 sowie der Krümmungsradius R2 der Gegenstützflächen 23, 25 und 27 denselben Mittelpunkt haben, der in dem in den Fig. 3 und 4 gezeigten Eingriffszustand des hakenartigen Verbindungselements 1 im Aufnahmeelement 2 auf der oberen hinteren Kante 26 der ersten Ausnehmung 22 liegt.

In der in Fig. 3 gezeigten Position befinden sich das hakenartige Verbindungselement 1 und das Aufnahmeelement 2 im Eingriff in einer verriegelten Position, die für den Tragflug des mit der Außenlast 3 versehenen Luftfahrzeugs 4 vorgesehen ist. Das am hakenartigen Verbindungselement 1 angreifende Gewicht G der Außenlast 3 oder die in der in Fig. 3 durch den Pfeil G wiedergegebenen Richtung wirkenden Massekräfte der Außenlast 3 ziehen das hakenartige Verbindungselement 1 nach unten, wobei sich dieses über seine unteren Stützflächen 13, 15 und 17 an den Gegenstützflächen 23, 25 und 27 des Aufnahmeelements 2 abstützt und somit nicht nach unten aus der Ausnehmung 22 heraustreten kann. Auch ein Heraustreten des hakenartigen Verbindungselements 1 nach hinten aus der Ausnehmung 22 ist durch die Hinterschneidung der oberen Gegenstützfläche 21 und der angepassten Neigung der oberen Stützfläche 11 wirksam verhindert.

Erst wenn die (nicht gezeigte) in Flugrichtung F vordere Befestigungsvorrichtung zur Befestigung der Außenlast 3 am Luftfahrzeug 4 geöffnet wird und die Nase der Außenlast 3 nach unten nickt, wie durch den Pfeil P in Fig. 4 symbolisiert ist, schwenkt das hakenartige Verbindungselement 1 im Drehsinn der Nickbewegung P, wobei die obere Stützfläche 11 der Nase 12 des hakenartigen Verbindungselements 1 aus der von der oberen Gegenstützfläche 21 gebildeten Hinterschneidung heraus schwenkt. Auch die unteren Stützflächen 13, 15 und 17 schwenken nach hinten aus der Berührung mit den ihnen jeweils zugeordneten Gegenstützflächen 23, 25, 27 heraus, wie in Fig. 4 dargestellt ist. In diesem Augenblick wird das hakenartige Verbindungselement 1 weder nach unten, noch nach hinten vom Aufnahmeelement 2 zurückgehalten und die Außenlast 3 kann sich nach unten und hinten vom Luftfahrzeug 4 wegbewegen, wobei zunächst noch die Nase 12 des hakenartigen Verbindungselements 1 in der zweiten, nutartigen Ausnehmung 24 geführt wird, wodurch die Gefahr einer Rotation der Außenlast 3 um deren Hochachse, also eine Gierbewegung der Außenlast 3, reduziert wird.

In Fig. 4 ist auch zu erkennen, dass sich die obere Stützfläche 11 des hakenartigen Verbindungselements 1 während des Verschwenkens der Außenlast 3 an der Kante 26 am oberen Rand der Ausnehmung 22 abstützt, so dass eine Bewegung der Außenlast 3 nach oben, also in Richtung auf das Luftfahrzeug 4 zu, verhindert wird.

Durch die gezeigte besondere geometrische Ausgestaltung des hakenartigen Verbindungselements 1 und des Aufnahmeelements 2 wird folglich erreicht, dass das hakenartige Verbindungselement 1 so lange vom Aufnahmeelement 2 festgehalten wird, bis ein vorgegebener Nickwinkel der Außenlast 3 überschritten wird. Beim Überschreiten dieses Winkels löst sich das hakenartige Verbindungselement 1 automatisch aus dem Aufnahmeelement 2, wobei jedoch nur eine Ausweichbewegung der Außenlast 3 nach unten und nach hinten möglich ist. Diese erfindungsgemäße Verbindungsanordnung ist mechanisch einfach aufgebaut und bedarf außer dem hakenartigen Verbindungselement 1 und dem Aufnahmeelement 2 keiner weiteren bewegbaren Teile, so dass sie nicht nur fehlerunanfällig, sondern auch noch kostengünstig in der Fertigung ist. Die Funktion des Auslösemechanismus' beruht ausschließlich auf der geometrischen Stellung der beiden Elemente der Verbindungsanordnung, nämlich dem hakenartigen Verbindungselement 1 und dem Aufnahmeelement 2 relativ zueinander. Auf eine zusätzliche Mechanik zum Auslösen des Verbindungselements kann bei der erfindungsgemäßen Lösung daher verzichtet werden. Die spezielle in den Figuren gezeigte und vorstehend beschriebene Formgebung des hakenartigen Verbindungselements 1 und des Aufnahmeelements 2 gewährleistet eine sichere Fixierung der Verbindungsanordnung in alle Richtungen, solange der vorgegebene Auslösewinkel γ nicht erreicht ist.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: hakenartiges Verbindungselement
- 2: Aufnahmeelement
- 3: abwerfbare Außenlast
- 4: Luftfahrzeug
- 10: Befestigungsschaft
- 11: obere Stützfläche
- 12: vorspringende Nase
- 13: erste untere Stützfläche
- 14: erster seitlicher Vorsprung
- 15: zweite untere Stützfläche
- 16: zweiter seitlicher Vorsprung
- 17: dritte untere Stützfläche
- 20: Befestigungsschaft
- 21: obere Gegenstützfläche
- 22: erste Ausnehmung
- 23: Gegenstützfläche
- 24: zweite, nutartige Ausnehmung
- 25: zweite Gegenstützfläche
- 26: hintere Mündungskante
- 27: dritte Gegenstützfläche
- 40: Pylon

- F: Flugrichtung
- G: Gewicht
- P: Pfeil
- R: Rückseite
- R1: Krümmungsradius
- R2: Krümmungsradius
- V: Vorderseite

## Patentansprüche

1. Lösbare Verbindungsanordnung zur Anbringung von abwerfbaren Außenlasten (3) an einem Luftfahrzeug, mit
- zumindest einem an der Außenlast (3) anbringbaren hakenartigen Verbindungselement (1) und
- zumindest einem am Luftfahrzeug (4) anbringbaren Aufnahmeelement (2) für das hakenartige Verbindungselement (1);
- wobei das hakenartige Verbindungselement (1) mit zumindest einer unteren Stützfläche (13) und zumindest einer oberen Stützfläche (11) versehen ist;
- wobei das Aufnahmeelement (2) mit zumindest einer ersten Gegenstützfläche (23), die zum Zusammenwirken mit der zumindest einen unteren Stützfläche (13) ausgebildet ist, und mit zumindest einer zweiten, oberen Gegenstützfläche (21) versehen ist, die zum Zusammenwirken mit der zumindest einen oberen Stützfläche (11) ausgebildet ist,
- wobei die untere Stützfläche (13) und die erste Gegenstützfläche (23) ausgestaltet sind, um vom Luftfahrzeug weg weisende Massenkräfte der Außenlast (3) abzustützen, und
- wobei das hakenartige Verbindungselement (1) einen Befestigungsschaft (10) aufweist, der mit der Außenlast (3) verbindbar oder verbunden ist und an dessen oberem Ende eine vorspringende Nase (12) vorgesehen ist,
- wobei die untere Stützfläche (13) an der Unterseite der Nase (12) ausgebildet ist,
- wobei das Aufnahmeelement (2) eine Ausnehmung (22) aufweist, die zum Eingriff der Nase (12) ausgebildet ist,
**dadurch gekennzeichnet,**
- **dass** die erste Gegenstützfläche (23) im Bereich der Wandung der Ausnehmung (22) vorgesehen ist und
- **dass** die obere Stützfläche (11) und die obere Gegenstützfläche (21) ausgestaltet sind, um zum Luftfahrzeug hin gerichtete Massenkräfte der Außenlast (3) abzustützen.

2. Verbindungsanordnung nach Anspruch 1,
**dadurch gekennzeichnet,**
**dass** das Aufnahmeelement (2) eine zweite, nutartige Ausnehmung (24) zur Aufnahme des Befestigungsschafts (10) des hakenartigen Verbindungselements (1) aufweist.

3. Verbindungsanordnung nach Anspruch 1, oder 2,
**dadurch gekennzeichnet,**
**dass** die obere Stützfläche (11) an einem oberen Abschnitt des hakenartigen Verbindungselements (1) vorgesehen ist und dass die obere Gegenstützfläche (21) zumindest an einer Kante (26) am oberen Rand der Ausnehmung (22) des Aufnahmeelements (2) ausgebildet ist.

4. Verbindungsanordnung nach Anspruch 3,
**dadurch gekennzeichnet,**
**dass** die untere Stützfläche (13) und die erste Gegenstützfläche (23) kreisbogenförmig gekrümmt sind.

5. Verbindungsanordnung nach Anspruch 4,
**dadurch gekennzeichnet,**
**dass** der Mittelpunkt des Krümmungsradius' (R1) der ersten Gegenstützfläche (23) auf der oberen Kante (26) liegt.

6. Verbindungsanordnung nach einem der vorhergehenden Ansprüche, **dadurch gekennzeichnet,**
- **dass** der Befestigungsschaft (10) des hakenartigen Verbindungselements (1) mit seitlichen Vorsprüngen (14, 16) versehen ist, die an ihrer Unterseite jeweils eine weitere untere Stützfläche (15, 17) aufweisen,
- **dass** das Aufnahmeelement (2) im Bereich der Ausnehmung (22) zur Aufnahme des jeweiligen linken beziehungsweise rechten seitlichen Vorsprungs (14, 16) ausgebildet ist und
- **dass** jeweils eine untere Gegenstützfläche (25, 27) im Bereich der unteren Wandung der Ausnehmung (22) vorgesehen ist.

7. Verbindungsanordnung nach Anspruch 6,
**dadurch gekennzeichnet,**
**dass** die jeweilige weitere untere Stützfläche (15, 17) und die jeweils zugeordnete untere Gegenstützfläche (25, 27) kreisbogenförmig gekrümmt sind.

8. Verbindungsanordnung nach Anspruch 7,
**dadurch gekennzeichnet,**
**dass** der Mittelpunkt des Krümmungsradius' (R1) der jeweiligen weiteren unteren Gegenstützfläche (25, 27) auf der oberen Kante (26) liegt.

## Claims

1. Detachable connecting arrangement for attaching external loads (3), which can be jettisoned, to an aircraft, having
- at least one hook-like connecting element (1) which can be attached to the external load (3) and
- at least one receiving element (2), which can be attached to the aircraft (4), for the hook-like connecting element (1);
- wherein the hook-like connecting element (1) is provided with at least one lower support surface (13) and at least one upper support surface (11);
- wherein the receiving element (2) is provided with at least one first opposing support surface (23) which is formed to cooperate with the at least one lower support surface (13), and with at least one second, upper opposing support surface (21) which is formed to cooperate with the at least one upper support surface (11),
- wherein the lower support surface (13) and the first opposing support surface (23) are configured to support mass forces of the external load (3) which are directed away from the aircraft, and
- wherein the hook-like connecting element (1) comprises a fastening shaft (10) which is, or can be, connected to the external load (3) and is provided at its upper end with a projecting nose (12),
- wherein the lower support surface (13) is formed on the lower side of the nose (12),
- wherein the receiving element (2) has a recess (22) which is configured for engagement of the nose (12), **characterised in that**
- the first opposing support surface (23) is provided in the region of the wall of the recess (22) and
- the upper support surface (11) and the upper opposing support surface (21) are configured to support mass forces of the external load (3) which are directed towards the aircraft.

2. Connecting arrangement as claimed in claim 1,
**characterised in that**
the receiving element (2) has a second, groove-like recess (24) to receive the fastening shaft (10) of the hook-like connecting element (1).

3. Connecting arrangement as claimed in claim 1 or 2,
**characterised in that**
the upper support surface (11) is provided on an upper portion of the hook-like connecting element (1) and that the upper opposing support surface (21) is formed at least on one border (26) at the upper edge of the recess (22) of the receiving element (2).

4. Connecting arrangement as claimed in claim 3,
**characterised in that**
the lower support surface (13) and the first opposing support surface (23) are curved in a circular arc.

5. Connecting arrangement as claimed in claim 4,
**characterised in that**
the middle point of the radius of curvature (R1) of the first opposing support surface (23) lies on the upper border (26).

6. Connecting arrangement as claimed in any one of the preceding claims,
**characterised in that**
- the fastening shaft (10) of the hook-like connecting element (1) includes lateral projections (14, 16), each of which has on its lower side a further lower support surface (15, 17),
- the receiving element (2) in the region of the recess (22) is formed to receive the respective left or right lateral projection (14, 16), and
- a lower opposing support surface (25, 27) is provided in each case in the region of the lower wall of the recess (22).

7. Connecting arrangement as claimed in claim 6,
**characterised in that**
each further lower support surface (15, 17) and the respectively associated lower opposing support surface (25, 27) are curved in a circular arc.

8. Connecting arrangement as claimed in claim 7,
**characterised in that**
a middle point of the radius of curvature (R1) of the respective further lower opposing support surface (25, 27) lies on the upper border (26).

## Revendications

1. Agencement de liaison amovible destiné à la fixation sur un véhicule aérien de charges extérieures (3) largables, comprenant
- au moins un élément de liaison (1) en forme de crochet, pouvant être fixé sur la charge extérieure (3) et
- au moins un élément de logement (2) pouvant être monté sur le véhicule aérien (4), pour l'élément de liaison (1) en forme de crochet ;
- dans lequel l'élément de liaison (1) en forme de crochet est muni d'au moins une surface d'appui inférieure (13) et d'au moins une surface d'appui supérieure (11) ;
- dans lequel l'élément de logement (2) est muni d'au moins une première contre-surface d'appui (23) qui est réalisée pour coopérer avec l'au moins une surface d'appui inférieure (13), et est muni d'au moins une deuxième contre-surface d'appui supérieure (21) qui est réalisée pour coopérer avec l'au moins une surface d'appui supérieure (11),
- dans lequel la surface d'appui inférieure (13) et la première contre-surface d'appui (23) sont conçues pour supporter des forces d'inertie de la charge extérieure (3), détournées du véhicule aérien, et
- dans lequel l'élément de liaison (1) en forme de crochet présente une tige de fixation (10) pouvant être reliée ou étant reliée à la charge extérieure (3) et sur l'extrémité supérieure duquel est ménagé un ergot (12) en saillie,
- dans lequel la surface d'appui inférieure (13) est réalisée sur le côté inférieur de l'ergot (12),
- dans lequel l'élément de logement (2) présente un évidement (22) qui est réalisé pour l'engagement de l'ergot (12),
**caractérisé en ce,**
- **que** la première contre-surface d'appui (23) est ménagée au niveau de la paroi de l'évidement (22) et
- en ce que la surface d'appui supérieure (11) et la contre-surface d'appui supérieure (21) sont conçues pour supporter les forces d'inertie de la charge extérieure (3), dirigées vers le véhicule aérien.

2. Agencement de liaison selon la revendication 1,
**caractérisé en ce**
**que** l'élément de logement (2) présente un deuxième évidement (24) en forme de rainure, destiné à loger la tige de fixation (10) de l'élément de liaison (1) en forme de crochet.

3. Agencement de liaison selon la revendication 1 ou 2,
**caractérisé en ce**
**que** la surface d'appui supérieure (11) est ménagée sur une section supérieure de l'élément de liaison (1) en forme de crochet et en ce que la contre-surface supérieure (21) est réalisée au moins sur une arête (26) sur le bord supérieur de l'évidement (22) de l'élément de logement (2).

4. Agencement de liaison selon la revendication 3,
**caractérisé en ce**
**que** la surface d'appui inférieure (13) et la première contre-surface d'appui (23) sont courbées en forme d'arc circulaire.

5. Agencement de liaison selon la revendication 4,
**caractérisé en ce**
**que** le centre du rayon de courbure (R1) de la première contre-surface d'appui (23) est situé sur l'arête supérieure (26).

6. Agencement de liaison selon l'une quelconque des revendications précédentes,
**caractérisé en ce**
- **que** la tige de fixation (10) de l'élément de liaison (1) en forme de crochet est munie de saillies latérales (14, 16) qui, sur leur côté inférieur, présentent respectivement une surface d'appui inférieure supplémentaire (15, 17),
- en ce que l'élément de logement (2), au niveau de l'évidement (22), est réalisé pour le logement de la saillie latérale respective gauche ou droite (14, 16) et
- en ce qu'une contre-surface d'appui inférieure (25, 27) est respectivement ménagée au niveau de la paroi inférieure de l'évidement (22).

7. Agencement de liaison selon la revendication 6,
**caractérisé en ce**
**que** la surface d'appui inférieure respectivement supplémentaire (15, 17) et la contre-surface d'appui inférieure respectivement correspondante (25, 27) sont courbées en forme d'arc circulaire.

8. Agencement de liaison selon la revendication 7,
**caractérisé en ce**
**que** le centre du rayon de courbure (R1) de la contre-surface d'appui inférieure respectivement supplémentaire (25, 27) est situé sur l'arête supérieure (26).
